# EUROPEAN PATENT APPLICATION

(11) **EP 4 276 236 A1**
(43) Date of publication of application: **15.11.2023**
(21) Application number: 22736548.3
(22) Date of filing: 05.01.2022
(51) Int. Cl.: D06F 39/14

(54) **WASHING MACHINE DOOR CONTROL METHOD AND APPARATUS, DEVICE, AND STORAGE MEDIUM**

(30) Priority: 08.01.2021 CN 202110022923
(71) Applicant: Qingdao Haier Washing Machine Co., Ltd., Qingdao, Shandong 266101 (CN); Haier Smart Home Co., Ltd., Qingdao, Shandong 266101 (CN)
(72) Inventor: LI, Wenwei, Qingdao, Shandong 266101 (CN); WU, Jun, Qingdao, Shandong 266101 (CN); WANG, Guangfeng, Qingdao, Shandong 266101 (CN)
(74) Representative: Barker Brettell LLP
(86) International application number: PCT/CN2022/070398
(87) International publication number: WO 2022/148386

(57) **Abstract**

Embodiments of the present application disclose a method and an apparatus for controlling a door of a washing machine, a device and a storage medium, which are intended to address a problem that it is of inconvenience to open a door of a washing machine when a user is holding too many clothing items in hands. The problem that it is relatively difficult or troublesome to open the door when the user is holding too many clothing items in hands is avoided by means of: receiving a first opening instruction sent by a first terminal device; setting a door in a to-be-opened state according to the first opening instruction; and receiving a second opening instruction input by a user, and controlling, according to the second opening instruction, the door in the to-be-opened state to open, namely, the washing machine enters the to-be-opened state upon receiving the opening instruction from the first terminal, and subsequently, upon receiving the second opening instruction input by the user, opens the door to make it convenient for the user to put in clothing items.

## Description

This application claims priority to Chinese Patent Application No. 202110022923.7, filed to the China National Intellectual Property Administration on January 8, 2021 and entitled "METHOD AND APPARATUS FOR CONTROLLING DOOR OF WASHING MACHINE, DEVICE AND STORAGE MEDIUM", which is hereby incorporated by reference in its entirety.

### TECHNICAL FIELD

The present application relates to the field of intelligent home appliance technologies and specifically, to a method and an apparatus for controlling a door of a washing machine, a device and a storage medium.

### BACKGROUND

Presently, with the popularization of intelligent washing machines, more and more people turn to purchasing and using the intelligent washing machines. Through intelligent control technology, an intelligent washing machine provides a more intelligent operation method and better washing performance, thereby improving user experience.

However, in some application scenarios, a problem of inconvenience in using still exists in current intelligent washing machines. For example, before putting a big load of clothing items into a washing machine for washing, a user needs to open the door of the washing machine firstly, in which case, since the user is holding multiple clothing items in hands, opening the door manually is a total inconvenience that imposes an obstacle for the user to operate, therefore, impairing efficiency of a user operation to the intelligent washing machine and experience in using the intelligent washing machine.

Correspondingly, a new method for controlling a door of a washing machine is desired in the field to address the foregoing problem.

### SUMMARY

An objective of the present application is to provide a method and an apparatus for controlling a door of a washing machine, a device and a storage medium, which are intended to address a problem that a current intelligent washing machine requires opening a door manually, and it is of inconvenience to open the door when a user is holding too many clothing items in hands.

In a first aspect, disclosed in the present application is a method for controlling a door of a washing machine. The method is applied to an intelligent washing machine and includes:
receiving a first opening instruction sent by a first terminal device; setting a door in a to-be-opened state according to the first opening instruction; and receiving a second opening instruction input by a user, and controlling, according to the second opening instruction, the door in the to-be-opened state to open.

In a possible implementation, the first terminal device is an intelligent wardrobe, and setting the door in the to-be-opened state according to the first opening instruction includes: when the first opening instruction includes washing procedure information, setting the door in the to-be-opened state, where the washing procedure information is used to give an indication to the intelligent washing machine to perform a washing operation.

In a possible implementation, the first terminal device is an intelligent wardrobe, the first opening instruction includes clothing item storage span information, and setting the door in the to-be-opened state according to the first opening instruction includes: setting the door in the to-be-opened state when the clothing item storage span information exceeds a preset duration.

In a possible implementation, controlling, according to the second opening instruction, the door in the to-be-opened state to open includes: determining an opening degree according to the first opening instruction; and controlling, according to the second opening instruction, the door in the to-be-opened state to open by the opening degree.

In a possible implementation, the first opening instruction includes clothing item type information, the intelligent washing machine is provided with a stepper motor, and determining the opening degree according to the first opening instruction includes: determining the opening degree according to the clothing item type information; and controlling, according to the second opening instruction, the door in the to-be-opened state to open by the opening degree includes: determining a target feed amount of the stepper motor according to the opening degree; and upon receiving the second opening instruction, controlling the stepper motor to rotate by the target feed amount to drive the door to open by a preset degree.

In a possible implementation, after setting the door in the to-be-opened state, the method further includes: outputting indication information corresponding to the to-be-opened state, where the indication information is used to give an indication to a user to input a second opening instruction.

In a possible implementation, the second opening instruction is a voice instruction.

In a second aspect, disclosed in the present application is an apparatus for controlling a door of a washing machine. The apparatus is applied to an intelligent washing machine and includes:
a receiving module, configured to receive a first opening instruction sent by a first terminal device;
a setting module, configured to set a door in a to-be-opened state according to the first opening instruction; and
a controlling module, configured to receive a second opening instruction input by a user, and control, according to the second opening instruction, the door in the to-be-opened state to open.

In a possible implementation, the first terminal device is an intelligent wardrobe, and the setting module is specifically configured to: set the door in the to-be-opened state when the first opening instruction includes washing program information, where the washing program information is used to give an indication to the intelligent washing machine to perform a washing operation.

In a possible implementation, the first terminal device is an intelligent wardrobe, the first opening instruction includes clothing item storage span information, and the setting module is specifically configured to: set the door in the to-be-opened state when the clothing item storage span information exceeds a preset duration.

In a possible implementation, the controlling module is specifically configured to: determine an opening degree according to the first opening instruction; and controlling, according to the second opening instruction, the door in the to-be-opened state to open by the opening degree.

In a possible implementation, the first opening instruction includes clothing item type information, the intelligent washing machine is provided with a stepper motor, and the controlling module is further configured to: determine the opening degree according to the clothing item type information; controlling, according to the second opening instruction, the door in the to-be-opened state to open by the opening degree includes: determine a target feed amount of the stepper motor according to the opening degree; and upon receiving the second opening instruction, control the stepper motor to rotate by the target feed amount to drive the door to open by a preset degree.

In a possible implementation, the setting module is further configured to, upon setting the door in the to-be-opened state, output indication information corresponding to the to-be-opened state, where the indication information is used to give an indication to a user to input a second opening instruction.

In a possible implementation, the second opening instruction is a voice instruction.

In a third aspect, disclosed in the present application is an electronic device, including a processor, a memory and a transceiver;
where the processor is configured to control the transceiver to receive or transmit a signal; the memory is configured to store a computer program; the processor is further configured to call and run the computer program stored in the memory, causing the electronic device to execute the method according to any one of the implementations in the foregoing first aspect.

In a fourth aspect, disclosed in the present application is a computer readable storage medium, including computer codes which, when running on a computer, cause the computer to execute the method according to any one of the implementations in the foregoing first aspect.

In a fifth aspect, disclosed in the present application is a computer program product, including program codes which, when running on a computer, execute the method according to any one of the implementations in the foregoing first aspect.

In a sixth aspect, disclosed in the present application is a chip, including a processor. The processor is configured to call and run a computer program stored in a memory to execute the corresponding operations and/or processes executed in the XXX method according to an embodiment of the present application. Optionally, the chip further includes a memory, which is connected to the processor via a circuit or wires, and the processor is configured to read and execute the computer program in the memory. Optionally, the chip further includes a communication interface, and the processor is connected to the communication interface. The communication interface is configured to receive data and/or information that needs to be processed, and the processor obtains the data and/or the information from the communication interface and processes the data and/or the information. The communication interface can be an input output interface.

In a seventh aspect, provided in an embodiment of the present application is a washing machine. The washing machine executes the method for controlling the door of the washing machine according to any one of the implementations in the foregoing first aspect.

In conjunction with the foregoing technical solutions, the present application allows for receiving a first opening instruction sent by a first terminal device; setting a door in a to-be-opened state according to the first opening instruction; and receiving a second opening instruction input by a user, and controlling, according to the second opening instruction, the door in the to-be-opened state to open, namely, the washing machine enters the to-be-opened state upon receiving the opening instruction from the first terminal, and subsequently, upon receiving the second opening instruction input by the user, opens the door to make it convenient for the user to put in clothing items, thereby avoiding the problem that it is relatively difficult or troublesome to open the door when the user is holding relatively many clothing items in hands.

### BRIEF DESCRIPTION OF DRAWINGS

FIG. 1 is a diagram of an application scenario of controlling a door of a washing machine according to an embodiment of the present application.
FIG. 2 is a flow chart diagram of a method for controlling a door of a washing machine according to an embodiment of the present application.
FIG. 3 is a schematic diagram of controlling a door to open according to an embodiment of the present application.
FIG. 4 is a flow chart diagram of a method for controlling a door of a washing machine according to another embodiment of the present application.
FIG. 5 is a flow chart diagram of a method for controlling a door of a washing machine according to yet another embodiment of the present application.
FIG. 6 is a schematic structural diagram of an apparatus for controlling a door of a washing machine according to an embodiment of the present application.
FIG. 7 is a schematic structural diagram of an electronic device according to an embodiment of the present application.

### DESCRIPTION OF EMBODIMENTS

Firstly, those skilled in the art should understand that the embodiments are only used to explain the technical principles of the present application and are not intended to limit the protection scope of the present application. Those skilled in the art can make modifications to them as needed to fit a specific application scenario. For example, although the method for controlling a door of a washing machine according to the present application is described in conjunction with an intelligent washing machine, this is not limiting. Other devices in need of clothing item processing can also be provided with the method for controlling a door of a washing machine according to the present application, such as a clothes dryer device.

In addition, it should be noted that in the description of the present application, unless otherwise specified and limited, the term "connected" or "connection" should be interpreted in a broad sense, for example, it can be a fixed connection, a detachable connection, or an integrated connection; it can be a mechanical connection, or an electrical connection; it can be a direct connection, or an indirect connection through an intermediate medium, or it can be an internal connection of two components. For those skilled in the art, a specific meaning of the mentioned term in the present application can be interpreted according to a specific situation.

Firstly, the terms related to the present application are explained as follows:
1) An intelligent home appliance device refers to a home appliance product formed by introducing microprocessor or sensor technology, and network communication technology into a home appliance device, which has characteristics of intelligent control, intelligent sensing, and intelligent application. An operation process of an intelligent home appliance device often relies on application and processing of modern technologies such as Internet of Things, the Internet, and an electronic chip. For example, the intelligent home appliance device can be connected to an electronic device, such that remote control and management by a user to the intelligent home appliance device can be achieved.
2) A terminal device refer to an electronic device with wireless connectivity functionality. The terminal device can be communicatively connected to the foregoing intelligent home appliance device by connecting to the Internet, it may also be communicatively connected to the foregoing intelligent home appliance device directly by means of Bluetooth, WiFi or otherwise. In some embodiments, the terminal device is, for example, a mobile device, a computer, or a vehicle mounted device built in a levitated vehicle, or any combination thereof. The mobile device may include, for example, a mobile phone, an intelligent home device, a wearable device, an intelligent mobile device, a virtual reality device, or any combination thereof, where the wearable device includes, for example, a smart watch, a smart bracelet, a pedometer, etc.

" Multiple" refers to two or more, other quantifiers have the similar meaning thereto. "And/or" is intended for describing an association relationship between associated objects, which indicates that there may be three kinds of relationships, for example, A and/or B may indicate three situations where A exists alone, both A and B exist, and B exists alone. Additionally, the character "/" generally indicates that contextually associated objects are in an "or" relationship.

"Corresponding to" may refer to an association relationship or a binding relationship. A being corresponding to B refers to an association relationship or a binding relationship between A and B.

An application scenario of an embodiment of the present application is explained as follows.

At present, when using a washing machine to wash a clothing item, manually opening the door of the washing machine is typically needed before the user can put in the clothing item to be cleaned. However, when the clothing items that the user needs to wash are relatively many, the user needs to hold multiple clothing items in hands, which makes it inconvenient for the user to operate when opening the door of the washing machine, thus, imposing an obstacle to the user' operation.

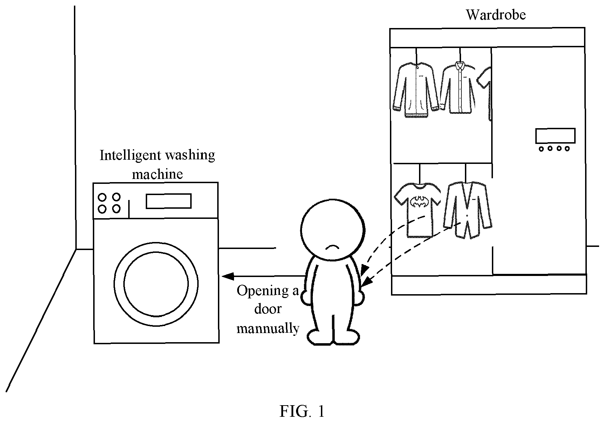

In an example, FIG. 1 is a diagram of an application scenario of controlling a door of a washing machine according to an embodiment of the present application. For example, when there is a seasonal change, the user, after sorting out clothing items, needs to wash the newly taken out clothing items for a new season. In this application scenario, the user needs to manually carry multiple clothing items to an area where the intelligent washing machine is placed. However, since the clothing items that the user is holding in hands are relatively many, it is relatively difficult for the user to manually open the door of the washing machine while holding the clothing items in hands. The user needs to put down the clothing items and then manually open the door, or needs to open the door of the washing machine in advance before picking up the clothing items, which results in lower efficiency of a washing operation by the user, and poor using experience of the user for the washing machine.

The technical solutions of the present application and how the technical solutions of the present application address the mentioned technical problem will be explained in detail in the following with specific embodiments. The following specific embodiments may be combined with each other, and a same or similar concept or process may not be repeated in some embodiments. Embodiments of the present application will be described hereunder in conjunction with the accompanying drawings.

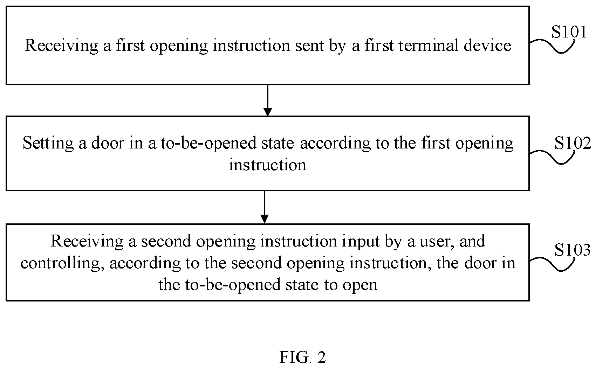

FIG. 2 is a flow chart diagram of a method for controlling a door of a washing machine according to an embodiment of the present application, the method is applied to an intelligent washing machine. As shown in FIG. 2, the method for controlling a door of a washing machine according to the embodiment includes the following steps.

Step S101, receiving a first opening instruction sent by a first terminal device.

Exemplarily, the intelligent washing machine receives the first opening instruction sent from the first terminal device, where the first terminal may be other intelligent home device, for example, a home appliance device with which the intelligent washing machine is capable of establishing communications, such as an intelligent wardrobe or others, or may be a controlling terminal such as a mobile phone, a computer, a bracelet, or other terminal devices. The first opening instruction may be used to give an indication to the intelligent washing machine to control the door to be in a to-be-opened state.

For example, when the intelligent wardrobe detects that a user has taken out a relatively large number of clothing items from the wardrobe, it is considered that the user needs to perform washing processing on the clothing items. At this time, it is deemed that the user needs the clothing items washed. At this time, the intelligent wardrobe may send the first opening instruction to the intelligent washing machine. The first opening instruction may carry laundry identification, where the laundry identification is used to represent that the user has a need for laundry currently.

Step S102, setting a door in a to-be-opened state according to the first opening instruction.

Exemplarily, the intelligent washing machine sets the door in the to-be-opened state upon receiving the first opening instruction. For example, identification for the to-be-opened state of the door may also be set in the first opening instruction. Namely, the intelligent wardrobe, upon detection that the clothing items in the wardrobe is reduced significantly, may send, to the intelligent washing machine, identification carrying the to-be-opened state of the door. The intelligent washing machine, upon receiving the identification for the to-be-opened state in the first opening instruction that is sent by the intelligent wardrobe, may start a program for setting the door in the to-be-opened state.

Step S103, receiving a second opening instruction input by a user, and controlling, according to the second opening instruction, the door in the to-be-opened state to open.

Exemplarily, when the state of the door is the to-be-opened state, if the second opening instruction is received from the user, where the second opening instruction represents a need for the intelligent washing machine to open the door, the intelligent washing machine will control the door of the washing machine to open. The second opening instruction from the user may be sent to the intelligent washing machine through voice, or it can also be executed by controlling an operation button on a terminal phone, computer, etc.

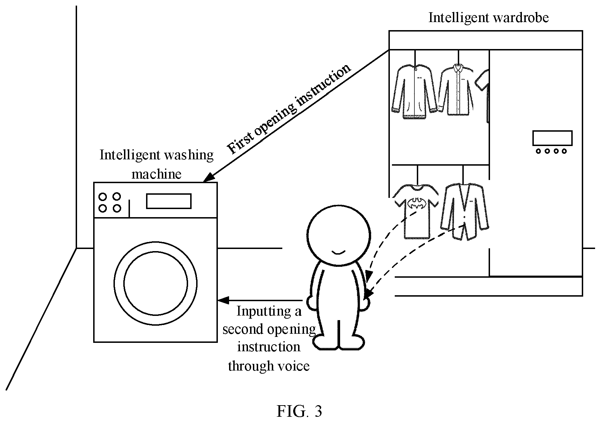

FIG. 3 is a schematic diagram of controlling a door to open according to an embodiment. As shown in FIG. 3, when the first terminal in the embodiment is an intelligent wardrobe, when there is a seasonal change, the user needs to sort out the clothing items in the intelligent wardrobe, and take out the clothing items for a new season from the wardrobe for washing and airing altogether. In a possible situation, if the intelligent wardrobe, at this time, detects that the clothing items in the wardrobe are decreased by a number surpassing a set value, it indicates that the user has taken out a relatively large amount of clothing items at this time, and the user may need these clothing items washed; and then the intelligent wardrobe may send the first opening instruction carrying the laundry identification to the intelligent washing machine; and the intelligent washing machine, upon receiving the laundry identification in the first opening instruction sent by the intelligent wardrobe, sets the door of the intelligent washing machine to the to-be-opened state. When the intelligent washing machine is in the to-be-opened state, if the intelligent washing machine receives the second opening instruction from the user for opening the door, it controls to open the door of the intelligent washing machine, where the second opening instruction may be voice input to the intelligent washing machine by the user. The voice input can relieve the user of the inconvenience of operating the related controlling terminal to open the door or opening the door manually when holding relatively many clothing items in hands. In addition, when the door is in the to-be-opened state, the door will only open when the second opening instruction from the user is received, avoiding the problem that the intelligent washing machine opens the door by mistake which results from some voice from a user conversation being taking as the opening instruction by the intelligent washing machine mistakenly.

In the embodiment, the first opening instruction sent by the first terminal device is received; the door is set in the to-be-opened state according to the first opening instruction, where the first opening instruction may be used to represent that the user has a need for laundry. When the intelligent washing machine with the door being in the to-be-opened state receives the second opening instruction input by the user, the intelligent washing machine controls, according to the second opening instruction, the door in the to-be-opened state to open. Namely, the washing machine enters the to-be-opened state upon receiving the opening instruction from the first terminal, and subsequently, upon receiving the second opening instruction input by the user, controls the door to open to make it convenient for the user to put in clothing items, where the second opening instruction represents that the user determines to open the door of the washing machine. Through the foregoing method, by means of the instructions transmission between the first terminal and the intelligent washing machine, the control for automatic opening of the door is implemented, avoiding the problem that it is relatively difficult or troublesome to open the door when the user is holding relatively many clothing items in hands.

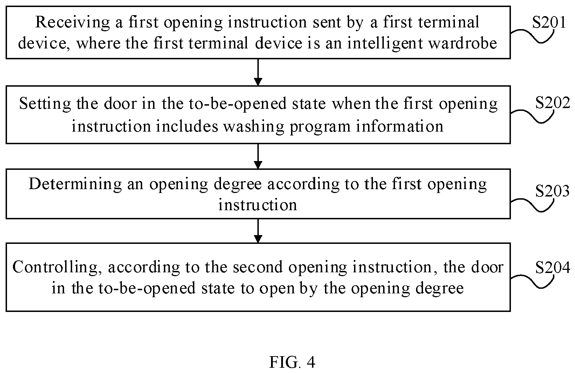

FIG. 4 is a flow chart diagram of a method for controlling a door of a washing machine according to another embodiment of the present application. As shown in FIG. 4, the method for controlling a door of a washing machine according to the embodiment includes the following steps.

Step S201, receiving a first opening instruction sent by a first terminal device, where the first terminal device is an intelligent wardrobe.

Exemplarily, reference can be made to Step S101 as shown in FIG. 2 for this step, which will not be repeated herein.

Step S202, setting the door in the to-be-opened state when the first opening instruction includes washing program information, where the washing program information is used to give an indication to the intelligent washing machine to perform a washing operation.

Exemplarily, the intelligent wardrobe, by means of monitoring image information of the clothing items in the wardrobe in real-time, may determine whether the clothing items in the intelligent wardrobe have been taken out, and determine a type and a storage duration for a respective clothing item according to an image feature of the respective clothing item such as the color, texture, shape, clothing label, etc. When it is detected that a clothing item in the wardrobe has been taken out, information representing a washing program, such as a washing mode or a washing duration, may be determined according to information such as the type and the storage duration of the clothing item which has been taken out, and such information may be sent as the first opening instruction to the intelligent washing machine. For example, for a clothing item with a relatively short storage span, the washing mode may be a fast washing mode, and the washing duration may be set as a relative short duration. Upon receiving the first opening instruction sent by the intelligent wardrobe, if the intelligent washing machine detects that the first opening instruction contains the washing program information, namely, the intelligent washing machine determines the information such as the washing mode or the washing duration in the received first opening instruction, it indicates that the first opening instruction contains the washing program information, at this time, the door is set in the to-be-opened state.

In an example, if the first opening instruction includes clothing item storage span information, set the door in the to-be-opened state when the clothing item storage span information exceeds a preset duration.

Exemplarily, the intelligent wardrobe can extract and store a specific feature of a respective clothing item according to clothing item features such as the color, texture and shape. Correspondingly, the specific feature of the respective clothing item is stored in association with the storage span thereof. Subsequently, when a clothing item is taken out, the intelligent wardrobe may further determine, based on the feature of the clothing item which has been taken out, the storage span information of the clothing item which has been taken out, and send the storage span information to the intelligent washing machine as the first opening instruction or part of information in the first opening instruction. Subsequently, the intelligent washing machine, upon detection of the storage span information carried in the first opening instruction sent by the intelligent wardrobe, performs determination with respect to the storage span information. If it is determined that the storage span information exceeds the preset duration, it represents that the clothing item has been stored in the intelligent wardrobe for a long time. Therefore, it is determined that the user has a need for laundry, and the door is set in the to-be-opened state.

Step S203, determining an opening degree according to the first opening instruction.

Exemplarily, upon obtaining the first opening instruction sent by the intelligent wardrobe, the intelligent washing machine may determine, according to the information in the first opening instruction, the opening degree of the door, namely, the opening amplitude of the door. For example, the opening degree of the door may be determined according to the number of clothing items in the first opening instruction sent by the intelligent wardrobe. The intelligent washing machine may be provided in advance with a preset relationship between the number of clothing items and opening degrees of the door. According to the preset relationship, the intelligent washing machine can find the opening degree corresponding to the number of clothing items contained in the first opening instruction. The opening degree of the door may be in positive correlation with the number of clothing items, namely, the greater the number of clothing items is, the greater the opening degree of the door is, and when the number of clothing items is relatively smaller, the corresponding opening degree of the door is smaller.

In an example, the first opening instruction includes the clothing item type information, and the intelligent washing machine is provided with a stepper motor. Accordingly, in Step S203, the opening degree can be determined according to the clothing item type information.

Exemplarily, the intelligent wardrobe may determine, according to a specific feature of a respective clothing item (for example, information such as texture or a label of the clothing item), the type of the clothing item. For example, the clothing item type may be classified as a down jacket, a sweater or the like. In addition, the type of a respective clothing item may be stored in association with extracted features of the respective clothing item. When the intelligent wardrobe sends the first opening instruction to the intelligent washing machine, the clothing item type information may also be sent as part of information in the first opening instruction to the intelligent washing machine. Upon receiving the clothing item type information in the first opening instruction, the intelligent washing machine determines the opening degree of the door according to the clothing item type. For example, when the intelligent washing machine detects that the clothing items which have been taken out from the intelligent wardrobe include a clothing item (a down jacket or the like) that needs to occupy a relatively large space in the inner cylinder of the washing machine, at this time, it is considered that the opening degree of the door of the washing machine needs to be set to a relatively large value, such that the user can put in the clothing items more easily. When the intelligent washing machine detects that only thin fabric type clothing items are included in the clothing items which have been taken out from the intelligent wardrobe, it is considered that the opening degree of the door of the washing machine may be set relatively small. By means of determining the opening degree of the door according to the clothing item type, mechanical wear at the door of the intelligent washing machine can be reduced. In addition, before washing, the user may have disinfection and sterilization performed on the inner cylinder of the intelligent washing machine, so as to eliminate bacteria, stains, etc. therein. When the clothing items are thick and heavy so that they occupy a large space, controlling the door to open by a large degree may ensure that, when the user is holding relatively many clothing items in hands and putting them into the inner cylinder of the washing machine, contact between the clothing items to be washed and the surface of the washing machine can be reduced or avoided, thereby, avoiding contamination from the stains and bacteria on the surface of the washing machine.

Step S204, controlling, according to the second opening instruction, the door in the to-be-opened state to open by the opening degree.

In an example, the second opening instruction is a voice instruction.

For example, when the intelligent washing machine receives the second opening instruction initiated by the user through voice, the intelligent washing machine further determines that the user needs to open the door of the washing machine for performing laundry. Accordingly, the intelligent washing machine may control, according to the determined opening degree of the door, the door of the intelligent washing machine to open by the opening degree, where the second opening instruction may be used to instruct the washing machine to execute a related program for opening the door.

For example, the second opening instruction may be an instruction of determination to open the door which is sent by the user through voice, and may further include washing procedure information (such as the washing mode and the washing duration) sent by the use through voice.

In an example, Step S204 can be implemented with the following steps:
Step 1, determining a target feed amount of the stepper motor according to the opening degree.

Step 2, upon receiving the second opening instruction, controlling the stepper motor to rotate by the target feed amount to drive the door to open by a preset degree.

Exemplarily, when the intelligent washing machine includes a stepper motor, the stepper motor can be used to control the opening or closing of the door of the washing machine. In addition, the amplitude of the opening degree of the door of the intelligent washing machine can be controlled by adjusting the target feed amount of the stepper motor. Upon determining the opening degree of the door, the intelligent washing machine may determine, according to a preset corresponding relationship between an opening degree of the door and a target feed amount of rotation of the stepper motor, or a preset algorithm or model of the target feed amount of rotation of the stepper motor, the target feed amount of rotation of the stepper motor corresponding to the current opening degree of the door. When the user sends a second opening instruction to the intelligent washing machine through voice, the intelligent washing machine can control the rotation of the stepper motor according to the target feed amount of rotation of the stepper motor, so as to cause the door of the washing machine to open according to the determined opening degree of the door by means of controlling the stepper motor in the intelligent washing machine.

In the embodiment, when the clothing items in the intelligent wardrobe have been taken out, the intelligent wardrobe will send the first opening instruction to the intelligent washing machine. When it is detected by the intelligent washing machine that the first opening instruction carries washing program information, the door of the washing machine may be set in the to-be-opened state. Or, the intelligent washing machine, upon detection of the storage span information carried in the first opening instruction, determines a relationship between the storage span information and the preset duration. If it is determined that the storage span information exceeds the preset duration, it represents that the clothing items have been stored in the intelligent washing machine for a long time. Therefore, the user takes out the clothing items at this time, and it is considered that these clothing items need washing, and the door is controlled to be in the to-be-opened state. Thereby, the joint control between the intelligent wardrobe and the intelligent washing machine is achieved. Subsequently, the intelligent washing machine may further determine the opening degree of the door of the intelligent washing machine according to the clothing item type information in the first opening instruction, and thus it is possible to reduce the mechanical wear of the door of the washing machine. Further, when the clothing item type is a type with a relatively large space occupation, for example, a down jacket or the like, the opening degree of the door may be set to be a larger degree. Since before each washing, the user may have disinfection and sterilization performed on the inner cylinder of the washing machine, opening by a relatively large degree can avoid contamination from the stains and bacteria or the like on the surface of the washing machine when the user is putting the clothing items into the washing machine. Specifically, upon the determination of the opening degree, the feed amount of the stepper motor in the intelligent washing machine can further be determined according to the opening degree. Then, upon receiving the second instruction from the user, opening the door according to the determined degree can be implemented by means of controlling the rotation of the stepper motor, thereby achieving automatic opening of the door without the need for manual control by the user.

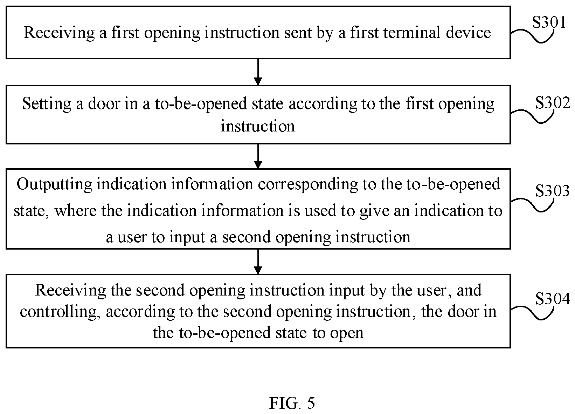

FIG. 5 is a flow chart diagram of a method for controlling a door of a washing machine according to yet another embodiment of the present application. As shown in FIG. 5, the method for controlling a door of a washing machine according to the embodiment adds a step of outputting indication information to Step S103 based on the method for controlling a door of a washing machine according to the embodiment as shown in FIG. 2. Accordingly, the method for controlling a door of a washing machine according to the embodiment includes the following steps.

Step S301, receiving a first opening instruction sent by a first terminal device.

Step S302, setting a door in a to-be-opened state according to the first opening instruction.

Exemplarily, for Step S301 and Step S302, reference can be made to Step S 101 and Step S 102 as shown in FIG. 2, or to Step S202-Step S203 in the embodiment as shown in FIG. 4, which will not be repeated herein.

Step S303, outputting indication information corresponding to the to-be-opened state, where the indication information is used to give an indication to a user to input a second opening instruction.

Exemplarily, upon setting door information to the to-be-opened state according to the first opening instruction sent by the intelligent wardrobe, the intelligent washing machine can prompt the user to further input the information of the second opening instruction, by means of sending the indication information to the user.

Specifically, the indication information may be audio indication information generated by an audio module in the intelligent washing machine, or it may be possible to prompt the user to further input the second opening instruction by means of the brightness information of an indicator light of the intelligent washing machine or otherwise, such that the intelligent washing machine can control the door to open upon receiving the second opening instruction.

Step S304, receiving the second opening instruction input by the user, and controlling, according to the second opening instruction, the door in the to-be-opened state to open.

For Step S304, reference can be made to Step S103 as shown in FIG. 2, or to Step S204 in the embodiment as shown in FIG. 4, which will not be repeated herein.

In the embodiment, the intelligent washing machine, upon setting the door of the washing machine to the to-be-opened state, may send prompt information to the user. Through the foregoing method, on the one hand, the user is informed that the door of the intelligent washing machine is currently in the to-be-opened state, such that the user can further determine, based on its own need, whether to send the second opening instruction to control the opening of the door of the intelligent washing machine. On the other hand, upon receiving the first opening instruction, the intelligent washing machine sets the door in the to-be-opened state instead of an opened state, which can avoid a situation where the door of the intelligent washing machine is opened mistakenly.

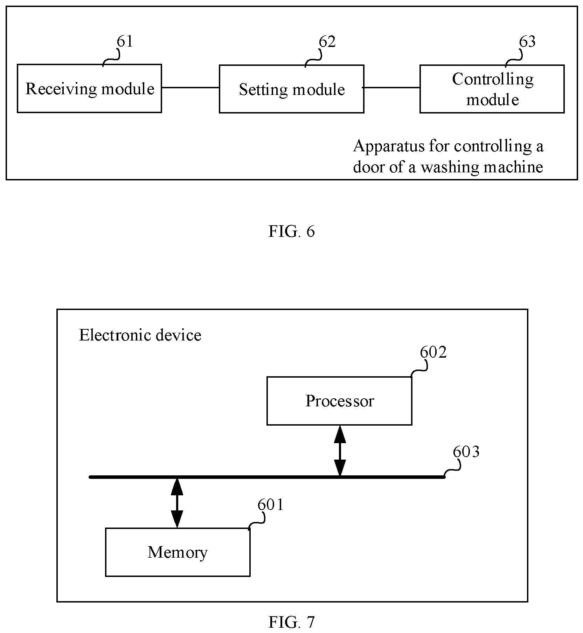

FIG. 6 is a schematic structural diagram of an apparatus for controlling a door of a washing machine according to an embodiment of the present application, the apparatus is applied to an intelligent washing machine. As shown in FIG. 6, the apparatus for controlling a door of a washing machine according to the embodiment includes:
a receiving module 61, configured to receive a first opening instruction sent by a first terminal device;
a setting module 62, configured to set a door in a to-be-opened state according to the first opening instruction; and
a controlling module 63, configured to receive a second opening instruction input by a user, and control, according to the second opening instruction, the door in the to-be-opened state to open.

In a preferred technical solution of the foregoing apparatus for controlling a door of a washing machine, the first terminal device is an intelligent wardrobe; and the setting module 62 is specifically configured to:
set the door in the to-be-opened state when the first opening instruction includes washing program information, where the washing program information is used to give an indication to the intelligent washing machine to perform a washing operation.

In a preferred technical solution of the foregoing apparatus for controlling a door of a washing machine, the first terminal device is an intelligent wardrobe, the first opening instruction includes clothing item storage span information, and the setting module 62 is specifically configured to: set the door in the to-be-opened state when the clothing item storage span information exceeds a preset duration.

In a preferred technical solution of the foregoing apparatus for controlling a door of a washing machine, the controlling module 63 is specifically configured to: determine an opening degree according to the first opening instruction; and controlling, according to the second opening instruction, the door in the to-be-opened state to open by the opening degree.

In a preferred technical solution of the foregoing apparatus for controlling a door of a washing machine, the first opening instruction includes clothing item type information, the intelligent washing machine is provided with a stepper motor, and the controlling module 63 is further configured to: determine the opening degree according to the clothing item type information; controlling, according to the second opening instruction, the door in the to-be-opened state to open by the opening degree includes: determine a target feed amount of the stepper motor according to the opening degree; and upon receiving the second opening instruction, control the stepper motor to rotate by the target feed amount to drive the door to open by a preset degree.

In a preferred technical solution of the foregoing apparatus for controlling a door of a washing machine, the setting module 62 is further configured to, upon setting the door in the to-be-opened state, output indication information corresponding to the to-be-opened state, where the indication information is used to give an indication to a user to input a second opening instruction.

In a preferred technical solution of the foregoing apparatus for controlling a door of a washing machine, the second opening instruction is a voice instruction.

The apparatus for controlling a door of a washing machine according to the embodiment can execute the technical solutions of the method embodiments as shown in FIG 2 to FIG. 5, and the implementation principles and beneficial effects thereof are similar, which will not be repeated herein.

FIG. 7 is a schematic structural diagram of an electronic device according to an embodiment of the present application. As shown in FIG. 7, the electronic device according to the embodiment includes a memory 601, a processor 602, and a computer program.

The computer program is stored in the memory 601 and configured to be executed by the processor 602 to implement the method for controlling a door of a washing machine according to any one of the embodiments corresponding to FIG. 2 to FIG. 5 of the present application.

The memory 601 and the processor 602 are connected via a bus 603.

The related explanations can be understood with reference to the related description and effect corresponding to the steps in the embodiments corresponding to FIG. 2 to FIG. 5, which will not be repeated herein.

Provided in an embodiment of the present application is a computer-readable storage medium, storing thereon a computer program. The computer program is executed by a processor to implement the method for controlling a door of a washing machine according to any one of the embodiments corresponding to FIG. 2 to FIG. 5 of the present application.

The computer-readable storage medium may be a ROM, a random access memory (RAM), a CD-ROM, a tape, a floppy disk, an optical data storage device, etc.

Provided in an embodiment of the present application is a computer program product, including a computer program. The computer program is executed by a processor to implement the method for controlling a door of a washing machine according to any one of the embodiments corresponding to FIG. 2 to FIG. 5 of the present application.

Provided in an embodiment of the present application is a chip, including a processor. The processor is configured to call and run a computer program stored in a memory to execute the corresponding operations and/or processes executed in the method for controlling a door of a washing machine according to an embodiment of the present application. Optionally, the chip further includes a memory, which is connected to the processor via a circuit or wires, and the processor is configured to read and execute the computer program in the memory. Optionally, the chip further includes a communication interface, and the processor is connected to the communication interface. The communication interface is configured to receive data and/or information that needs to be processed, and the processor obtains the data and/or the information from the communication interface and processes the data and/or the information. The communication interface can be an input output interface.

Provided in an embodiment of the present application is a washing machine, which implements the method for controlling a door of a washing machine according to any one of the embodiments corresponding to FIG. 2 to FIG. 5 of the present application.

In the several embodiments provided in the present application, it should be understood that the apparatus and method disclosed may be implemented in other manners. For example, the apparatus embodiments described above are merely illustrative. For example, the partition of the modules is only a logical function partition. There may be other manners for partition in a practical implementation, for example, multiple modules or components may be combined or integrated into another system, or some features may be omitted or not executed. In addition, the mutual coupling or direct coupling or communication connection shown or discussed may be an indirect coupling or communication connection through some interfaces, apparatuses or modules, which may be electrical, mechanical or otherwise.

After considering the specification and practicing the application disclosed herein, those skilled in the art will easily arrive at other implementations of the present application. The present application is intended to cover any variations, uses, or adaptive changes of the present application. The variations, uses, or adaptive changes follow the general principles of the present application and include common knowledge or commonly used technical means in the art that are not disclosed in the present application. The specification and embodiments are only considered as exemplary, and the true scope and spirit of the present application are indicated in the following claims.

It should be understood that the present application is not limited to the precise structure already described above and shown in the accompanying drawings, and various modifications and changes can be made without departing from the scope of the present application. The scope of the present application is limited only by the appended claims.
At this point, the technical solutions of the present application has been described in conjunction with the preferred embodiments as shown in the accompanying drawings. However, it is evident to those skilled in the art that the protection scope of the present application is apparently not limited to these specific embodiments. Those skilled in the art may make equivalent modifications or substitutions to the related technical features without departing from the principles of the present application, and such modified or substituted technical solutions will still fall within the protection scope of the present application. Those skilled in the art should be aware that in one or more of the foregoing examples, the functions described in the embodiments of the present application can be implemented using hardware, software, firmware, or any combination thereof. When implemented using software, these functions can be stored in a computer readable medium or transmitted as one or more instructions or codes on the computer readable medium. The computer readable medium includes a computer storage medium and a communication medium, where the communication medium includes any medium that facilitates the transfer of a computer program from one place to another. The storage medium may be any available medium that can be accessed by a general-purpose or dedicated computer.

## Claims

1. A method for controlling a door of a washing machine, the method being applied to an intelligent washing machine and comprising:
receiving a first opening instruction sent by a first terminal device;
setting a door in a to-be-opened state according to the first opening instruction; and
receiving a second opening instruction input by a user, and controlling, according to the second opening instruction, the door in the to-be-opened state to open.

2. The method according to claim 1, wherein the first terminal device is an intelligent wardrobe, and setting the door in the to-be-opened state according to the first opening instruction comprises:
setting the door in the to-be-opened state when the first opening instruction comprises washing program information, wherein the washing program information is used to give an indication to the intelligent washing machine to perform a washing operation.

3. The method according to claim 1, wherein the first terminal device is an intelligent wardrobe, the first opening instruction comprises clothing item storage span information, and setting the door in the to-be-opened state according to the first opening instruction comprises:
setting the door in the to-be-opened state when the clothing item storage span information exceeds a preset duration.

4. The method according to claim 1, wherein controlling, according to the second opening instruction, the door in the to-be-opened state to open comprises:
determining an opening degree according to the first opening instruction; and
controlling, according to the second opening instruction, the door in the to-be-opened state to open by the opening degree.

5. The method according to claim 4, wherein the first opening instruction comprises clothing item type information, the intelligent washing machine is provided with a stepper motor, and determining the opening degree according to the first opening instruction comprises:
determining the opening degree according to the clothing item type information;
controlling, according to the second opening instruction, the door in the to-be-opened state to open by the opening degree comprises:
determining a target feed amount of the stepper motor according to the opening degree; and
upon receiving the second opening instruction, controlling the stepper motor to rotate by the target feed amount to drive the door to open by a preset degree.

6. The method according to claim 1, wherein after setting the door in the to-be-opened state, the method further comprises:
outputting indication information corresponding to the to-be-opened state, wherein the indication information is used to give an indication to a user to input a second opening instruction.

7. The method according to claim 1, wherein the second opening instruction is a voice instruction.

8. An apparatus for controlling a door of a washing machine, the apparatus being applied to an intelligent washing machine and comprising:
a receiving module, configured to receive a first opening instruction sent by a first terminal device;
a setting module, configured to set a door in a to-be-opened state according to the first opening instruction; and
a controlling module, configured to receive a second opening instruction input by a user, and control, according to the second opening instruction, the door in the to-be-opened state to open.

9. The apparatus according to claim 8, wherein the first terminal device is an intelligent wardrobe; and
the setting module is specifically configured to:
set the door in the to-be-opened state when the first opening instruction comprises washing program information, wherein the washing program information is used to give an indication to the intelligent washing machine to perform a washing operation.

10. The apparatus according to claim 8, wherein the first terminal device is an intelligent wardrobe, the first opening instruction comprises clothing item storage span information, and
the setting module is specifically configured to:
set the door in the to-be-opened state when the clothing item storage span information exceeds a preset duration.

11. The apparatus according to claim 8, wherein the controlling module is specifically configured to:
determine an opening degree according to the first opening instruction; and control, according to the second opening instruction, the door in the to-be-opened state to open by the opening degree.

12. The apparatus according to claim 11, wherein the first opening instruction comprises clothing item type information, the intelligent washing machine is provided with a stepper motor, and the controlling module is further configured to:
determine the opening degree according to the clothing item type information;
controlling, according to the second opening instruction, the door in the to-be-opened state to open by the opening degree comprises:
determine a target feed amount of the stepper motor according to the opening degree; and
upon receiving the second opening instruction, control the stepper motor to rotate by the target feed amount to drive the door to open by a preset degree.

13. The apparatus according to claim 8, wherein the setting module is further configured to:
upon setting the door in the to-be-opened state, output indication information corresponding to the to-be-opened state, wherein the indication information is used to give an indication to a user to input a second opening instruction.

14. The apparatus according to any one of claims 8 to 13, wherein the second opening instruction is a voice instruction.

15. An electronic device, comprising: a memory, a processor and a computer program;
wherein the computer program is stored in the memory and configured to be executed by the processor to implement the method for controlling a door of a washing machine according to any one of claims 1 to 7.

16. A computer-readable storage medium, storing thereon computer executable instructions which, when being executed by a processor, are configured to implement the method for controlling a door of a washing machine according to any one of claims 1 to 7.

17. A computer program product, comprising program codes, wherein when a computer runs the computer program product, the program codes implement the method according to any one of claims 1 to 7.

18. A chip, comprising a processor, wherein the processor is configured to call and run a computer program stored in a memory to execute the method according to any one of claims 1 to 7.
